# EUROPEAN PATENT APPLICATION

(11) **EP 4 693 601 A1**
(43) Date of publication of application: **11.02.2026**
(21) Application number: 23930134.4
(22) Date of filing: 26.12.2023
(51) Int. Cl.: H01M 10/44

(54) **SECONDARY BATTERY CHARGING METHOD**

(30) Priority: 30.03.2023 CN 202310336993
(71) Applicant: Sunwoda Mobility Energy Technology Co., Ltd., Shenzhen, Guangdong 518107 (CN)
(72) Inventor: ZHANG, Xuhui, Shenzhen, Guangdong 518107 (CN); WANG, Baoyu, Shenzhen, Guangdong 518107 (CN); CHEN, Hui, Shenzhen, Guangdong 518107 (CN); ZHANG, Yao, Shenzhen, Guangdong 518107 (CN)
(74) Representative: Boult Wade Tennant LLP
(86) International application number: PCT/CN2023/141907
(87) International publication number: WO 2024/198571

(57) **Abstract**

The disclosure provides a method of charging a secondary battery. The state capacity is greater than or equal to the rated capacity, and the secondary battery is determined to be in the early stage of the cycle service life. The capacity-limited charging is adopted in the early stage, and when a capacity of the secondary battery reaches the rated capacity, charging is stopped, ensuring that the capacity of the secondary battery in the early stage is kept from degrading, and the cycle service life of the secondary battery is effectively prolonged.

## Description

This application claims priority to Chinese Patent Application No. 202310336993.9, filed on March 30, 2023, and entitled "Method of Charging Secondary Battery", which is incorporated herein by reference in its entirety.

### FIELD

The present disclosure relates to the field of battery technologies, and in particular, to a method of charging a secondary battery.

### BACKGROUND

Secondary batteries, such as lithium iron phosphate batteries, have become one of the key development directions for battery energy storage due to their advantages of low raw material cost, high safety performance, long cycle life, environmental friendliness and the like.

Although the lithium iron phosphate battery has substantial advantages in the energy storage field, there are still some problems in practical applications. Currently, the cycle life of the lithium iron phosphate individual battery cell is short, and it is difficult to meet the high cycle-life requirements on the secondary batteries intended for 20-30 years of service life (over 10000 cycles). Research indicates that the loss of active lithium is a major factor affecting the life degradation of the secondary battery, and due to the large loss of the active lithium, anode sheets tend to have excess storage lithium capacity at the end of the life cycle of the secondary battery, resulting in a waste of the anode active material. However, reducing the use of the anode active material greatly increases the lithium plating risk of the secondary battery during the working process, resulting in a rapid deterioration of the service life of the secondary battery and higher usage costs.

### SUMMARY

### TECHNICAL PROBLEM

The present disclosure provides a method of charging a secondary battery, which can solve the problem of short cycle life of an existing secondary battery.

### TECHNICAL SOLUTION

A first aspect of the present disclosure provides a method of charging a secondary battery, including the following steps:
obtaining state information of a secondary battery to be charged, the state information including a rated capacity and a state capacity, wherein the state capacity is a capacity when the secondary battery to be charged is charged to a predetermined cut-off charging voltage;
comparing the rated capacity with the state capacity;
charging, in response to the state capacity being greater than or equal to the rated capacity, the secondary battery to be charged until a capacity of the secondary battery to be charged reaches the rated capacity, and stopping charging of the secondary battery to be charged.

In some embodiments, after comparing the rated capacity with the state capacity, the method further includes: charging, in response to the state capacity being less than the rated capacity, the secondary battery to be charged until a voltage of the secondary battery to be charged reaches a predetermined cut-off charging voltage, and stopping charging of the secondary battery to be charged.

In some embodiments, charging the secondary battery to be charged includes: charging the secondary battery to be charged with a constant charging current, wherein the charging current is Iₙ, Iₙ = n₁ × Cₙ, 0 < n₁ ≤ 10, where Cₙ is the rated capacity in ampere-hours (Ah), and Iₙ is expressed in amperes (A).

In some embodiments, charging the secondary battery to be charged includes: charging the secondary battery to be charged with a constant charging power, wherein the charging power is Pₙ, Pₙ = n₂ × 3.2 × Cₙ, 0 < n₂ ≤ 5, where Cₙ is the rated capacity in ampere-hours (Ah), and Pₙ is expressed in watts (W).

In some embodiments, charging the secondary battery to be charged includes: charging the secondary battery to be charged with a stepped charging current, wherein a maximum value of the stepped charging current is Iₘₐₓ, a minimum value of the stepped charging current is Iₘᵢₙ, and 1 < Iₘₐₓ/Iₘᵢₙ < 100 is satisfied.

In some embodiments, charging the secondary battery to be charged with the stepped charging current includes:
dividing a charging process of the secondary battery to be charged into N charging stages with stepwise variation, where N ≥ 2;
setting a charging current of each of the N charging stages;
setting a cut-off charging capacity of each of the N charging stages;
performing constant current charging on the secondary battery to be charged based on the charging current of a respective charging stage of the N charging stages, and switching to a next charging stage when the capacity of the secondary battery to be charged reaches the cut-off charging capacity that is set in the respective charging stage.

In some embodiments, charging the secondary battery to be charged with the stepped charging current includes:
dividing a charging process of the secondary battery to be charged into N charging stages with stepwise variation, where N ≥ 2;
setting a charging current of each of the N charging stages;
setting a cut-off charging voltage of each of the N charging stages;
performing constant current charging on the secondary battery to be charged based on the charging current of a respective charging stage of the N charging stages, and switching to a next charging stage when a voltage of the secondary battery to be charged reaches the cut-off charging voltage that is set in the respective charging stage.

In some embodiments, the charging current of the N charging stages is sequentially decreased from a first charging stage to a N^{th} charging stage.

In some embodiments, charging the secondary battery to be charged includes: charging the secondary battery to be charged with a stepped charging power, wherein a maximum value of the stepped charging power is Pₘₐₓ, a minimum value of the stepped charging power is Pₘᵢₙ, and 1 < Pₘₐₓ/Pₘᵢₙ < 75 is satisfied.

In some embodiments, charging the secondary battery to be charged with the stepped charging power includes:
dividing a charging process of the secondary battery to be charged into N charging stages with stepwise variation, where N ≥ 2;
setting a charging power of each of the N charging stages;
setting a cut-off charging capacity of each of the N charging stages;
performing constant power charging on the secondary battery to be charged based on the charging power of a respective charging stage of the N charging stages, and switching to a next charging stage when a capacity of the secondary battery to be charged reaches the cut-off charging capacity that is set in the respective charging stage.

In some embodiments, charging the secondary battery to be charged with the stepped charging power includes:
dividing a charging process of the secondary battery to be charged into N charging stages with stepwise variation, where N ≥ 2;
setting a charging power of each of the N charging stages;
setting a cut-off charging voltage of each of the charging stages;
performing constant power charging on the secondary battery to be charged based on the charging power of a respective charging stage of the N charging stages, and switching to a next charging stage when a voltage of the secondary battery to be charged reaches the cut-off charging voltage that is set in the respective charging stage.

In some embodiments, the charging power of the N charging stages is sequentially decreased from a first charging stage to a N^{th} charging stage.

### BENEFICIAL EFFECTS

According to the method of charging the secondary battery, a capacity of the secondary battery when the secondary battery is charged to reach a predetermined cut-off charging voltage is defined as a state capacity, and the state capacity is compared with a rated capacity of the secondary battery, to determine whether the secondary battery is in an early stage or a middle or later stage of its cyclic service life. If the state capacity is greater than or equal to the rated capacity, it is determined that the secondary battery is in the early stage of the cyclic service life, i.e., no capacity degradation has yet occurred in the secondary battery or the capacity of the secondary battery has not dropped below the rated capacity, and a charging strategy of capacity-limited charging is adopted in the early stage of the cycle service life of the secondary battery, i.e., when the capacity of the secondary battery reaches the rated capacity, charging of the secondary battery is stopped. In this way, the amount of lithium ions embedded in the anode sheet of the secondary battery reaches its maximum without exceeding the rated capacity of the secondary battery, preventing lithium plating on the anode sheet that would be caused by an excess of lithium ions extracted from the cathode electrode sheet. Further, since the anode active material on the anode sheet undergoes virtually no loss during lithium ions (de)intercalation (or extraction/insertion), it can be ensured that the anode sheet of the secondary battery is always at the maximum amount of lithiation in the early stage of the life service cycle of the secondary battery, so that the secondary battery in the early stage of the cyclic service life has no capacity degradation, and the cycle service life of the secondary battery is effectively prolonged.

### BRIEF DESCRIPTION OF DRAWINGS

FIG. 1 is a flowchart of a method of charging a secondary battery according to an embodiment of the present disclosure;
FIG. 2 is a schematic structural diagram of a system of charging a secondary battery according to an embodiment of the present disclosure.

### EMBODIMENTS OF THE PRESENT DISCLOSURE

The present disclosure provides a battery cell, an assembly method of a battery cell, and a battery pack, and in order to make the objectives, technical solutions and effects of the present disclosure clearer and more definite, the present disclosure will be described in further detail with reference to the accompanying drawings and embodiments. It should be understood that the specific embodiments described herein are merely used to explain the present disclosure, and are not intended to limit the present disclosure.

In some embodiments of the present disclosure, a method of charging a secondary battery is provided. The method includes the following steps.

At S110, state information of a secondary battery is obtained. The state information includes a rated capacity and a state capacity, and the state capacity is a capacity of the secondary battery when the secondary battery is charged to a predetermined cut-off charging voltage.

In this step, the rated capacity is a capacity of the secondary battery specified in accordance with the national standard, that is, the capacity specified in the product specification of the secondary battery, and each secondary battery has a fixed rated capacity after its design and manufacturing are completed.

In this step, the state capacity may be estimated by using a battery management system (BMS), and specifically, the battery management system may predetermine/preset a cut-off charging voltage of the secondary battery, and estimate a capacity of the secondary battery when the secondary battery is charged to reach the predetermined cut-off charging voltage by collecting information such as a charging current, a real-time charging voltage, a temperature and an internal resistance of the secondary battery. Further, the battery management system may estimate a state capacity of the secondary battery when charged to the predetermined cut-off charging voltage by estimating a state of health (SOH) of the secondary battery. For example, the battery management system may determine two accurate state of charge (SOC) values of the secondary battery according to the OCV-SOC curve, accumulate the accumulated charge or discharge capacity between the two SOCs, and then calculate the capacity of the secondary battery, thereby obtaining the SOH. The SOC estimation method may be performed by one of an ampere-hour integration method, an open-circuit voltage method, a Kalman filtering method, and a particle filtering algorithm, and these several estimation methods are conventional, and details thereof will not be described herein again. The state of charge may be represented by using charge electric quantity. When the charge electric quantity is greater than a predetermined charge electric quantity threshold, it indicates that the secondary battery is currently fully charged; and when the charge electric quantity is not greater than the predetermined charge electric quantity threshold, it indicates that the secondary battery has a low state of charge and needs to be charged.

In this step, the predetermined cut-off charging voltage may be set by the battery management system. The cut-off charging voltage is also referred to as a limited charge voltage. In the overcharge of the secondary battery, a voltage of the secondary battery rises as the capacity increases, and the excessively high voltage will cause damage to the secondary battery. In order to ensure the cycle service life of the secondary battery, it is necessary to carry out an overcharge protection (i.e., excessive charging protection) for the secondary battery, that is, charging of the secondary battery is limited by the cut-off charging voltage, and if the voltage of the secondary battery reaches the cut-off charging voltage, charging of the secondary battery is stopped to protect the secondary battery. Generally, the cut-off charging voltage of the secondary battery is greater than a rated voltage of the secondary battery. Taking a lithium iron phosphate individual battery cell as an example, a rated voltage of the lithium iron phosphate individual battery cell is 3.2V, and a cut-off charging voltage thereof is 3.65V. The cut-off charging voltage of the secondary battery is higher than the rated voltage of the secondary battery since the secondary battery has a theoretical capacity and a rated capacity, and in order to ensure the health use state and the cycle service life of the secondary battery, the set rated capacity is required to be less than the theoretical capacity, for example, the rated capacity is 90% to 95% of the theoretical capacity.

At S120, the rated capacity is compared with the state capacity.

In this step, the rated capacity and the state capacity of the secondary battery are compared through the battery management system, and a comparison result is obtained.

At S130a, if the state capacity is greater than or equal to the rated capacity, the secondary battery to be charged is charged until a capacity of the secondary battery reaches the rated capacity, and charging of the secondary battery is stopped.

In this step, the battery management system obtains that the state capacity of the secondary battery is greater than or equal to the rated capacity by comparing the rated capacity and the state capacity of the secondary battery, and a charging method adopted for the secondary battery is capacity-limited charging. The so-called capacity-limited charging is that, when the actual capacity of the secondary battery reaches the rated capacity, charging of the secondary battery is stopped. When the state capacity of the secondary battery is greater than or equal to the rated capacity, the voltage of the secondary battery is usually lower than the predetermined cut-off charging voltage when the capacity reaches the rated capacity.

Taking a lithium iron phosphate battery as an example, if a rated capacity C of the lithium iron phosphate battery Cₙ is 100 Ah, a state capacity of the lithium iron phosphate battery estimated by the battery management system is 110 Ah, which is greater than the rated capacity, the lithium iron phosphate battery is charged until the capacity reaches the rated capacity 100 Ah, and charging is stopped.

The existing method of charging the secondary battery usually adopts constant current constant voltage (CCCV) charging. The constant current constant voltage charging is divided into two stages, including a first stage, i.e., constant current (CC) charging, in which charging is performed at a constant current when a voltage of the secondary battery is lower than the cutoff charging voltage, and a second stage, i.e., a constant voltage charging stage. In the constant voltage charging stage, when the voltage of the secondary battery reaches the cut-off charging voltage, any further rise of the voltage would damage the battery due to the characteristics of the secondary battery, and thus the voltage is fixed at the cut-off charging voltage, the charging is switched to be in a mode of constant voltage (CV) charging, and the charging current is gradually reduced. When the current is reduced to a certain value (generally 1/10 of the current as originally set), the charging circuit is cut off, an indicator light indicating that charging is completed is turned on, and the charging is completed.

Research indicates that active lithium loss is a major factor in the life degradation of the secondary battery. During the lithium (de)intercalation process of the secondary battery, due to expansion and shrinkage of the anode active material, dissolution of transition metals from the cathode, and the like, cracking and generation of the SEI film are caused, an area and a thickness of the SEI film are increased, limited active lithium in the secondary battery system is consumed, and finally the cycle service life of the secondary battery is shortened. However, in the existing constant current constant voltage charging method, especially when the cut-off charging voltage is a charging cut-off target of a first stage in the constant current charging stage, excessive active lithium is caused to be extracted from a cathode sheet of the secondary battery. However, there is a limited number of lithium intercalation vacancies of the anode active material layer on the anode sheet, and the active lithium that is extracted from the cathode sheet cannot be completely embedded into the lithium intercalation vacancies of the anode sheet, leading to lithium plating on the anode sheet, resulting in cracking and generation of the SEI film, and causing an increase in the area and thickness of the SEI film, further consuming the active lithium extracted from the cathode sheet, and leading to a shortened cycle life of the secondary battery. In the existing art, the charging mode of the constant current constant voltage (CCCV) causes a large capacity degradation of the capacity of the secondary battery in the early stage of the service life.

According to the method of charging the secondary battery provided by the embodiment of the present disclosure, the state capacity and the rated capacity of the secondary battery are obtained, and the state capacity and the rated capacity are compared, if the state capacity of the secondary battery is greater than or equal to the rated capacity of the secondary battery, the secondary battery is subjected to capacity-limited charging. In the charging process of the secondary battery, the real-time capacity of the secondary battery is obtained in real time or periodically through the battery management system, and when the real-time capacity of the secondary battery reaches the rated capacity, charging of the secondary battery is stopped. The secondary battery being charged until the capacity reaches the rated capacity indicates that the amount of lithium intercalation in the lithium intercalation vacancies on the anode active material layer of the anode sheet reaches the maximum in the process of cyclically (de)intercalating the active lithium from the secondary battery, and if the charging continues, the active lithium extracted from the cathode sheet cannot be intercalated into the anode active material layer, causing lithium plating, and affecting the cycle service life of the secondary battery.

Moreover, by applying the charging mode of the capacity-limited charging provided by the above embodiments of the present disclosure, the capacity degradation rate of the secondary battery over the service life is greatly reduced. After the test, with the charging method of the present disclosure, the number of zero degradation cycles of the secondary battery under the condition of 25°C and 1C/1C can reach 1600 to 1900, the capacity retention rate after 6000 times of cycle under the condition of 25°C and 1C/1C reaches up to 81.8%. In contrast, when the secondary battery is charged in the constant current and constant voltage charging mode, the number of zero degradation cycles of the secondary battery under the condition of 25°C and 1C/1C is 0, and the capacity retention rate after 6000 times of cycle under the condition of 25°C and 1C/1C is only 31.3%.

The cycle life shortening of the secondary battery is caused by active lithium loss, and in the cycling process of the secondary battery, the anode active material on the anode sheet and the cathode active material on the cathode sheet remain basically lossless, i.e., the lithium-intercalation vacancies on the anode layer show basically no decay. According to the charging method provided by the embodiment of the present disclosure, when the state capacity of the secondary battery is greater than or equal to the rated capacity of the secondary battery, each charging is performed by using the capacity-limited charging mode, the lithium intercalation amount on the anode sheet can be kept unchanged, so that the capacity of the secondary battery is kept without degradation or a minor amplitude of degradation, and the cycle service life of the secondary battery is effectively prolonged.

Moreover, since a capacity-limited charging mode is adopted, the state capacity of the secondary battery is greater than or equal to the rated capacity, so that when the secondary battery is charged to the rated capacity, there is an additional residual capacity, that is, a difference between the state capacity and the rated capacity, and existence of the residual capacity enables a certain amount of active lithium to be retained in the cathode active material of the cathode sheet. That is, the quantity of active lithium on the cathode sheet is higher than that of the lithium intercalation vacancy on the anode sheet, and the active lithium is relatively rich. On the one hand, in the process of lithium (de)intercalation, a depth of the cathode sheet from which the active lithium is extracted is relatively low, and a resistance for extracting the active lithium is relatively low, so that the energy efficiency of the secondary battery can be effectively improved, and the energy loss in the charging and discharging process is reduced. On the other hand, the relatively rich active lithium on the cathode sheet may serve as a reserve to supplement the loss of active lithium in the secondary battery cyclic operation.

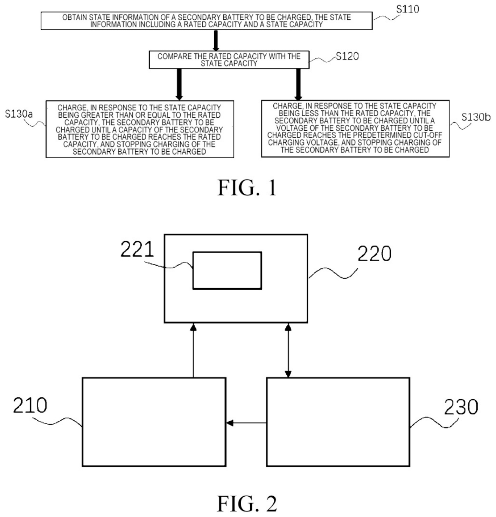

As the secondary battery continues to be cycled over time, the state capacity of the secondary battery gradually degrades, and when the state capacity degrades below the rated capacity of the secondary battery, in some embodiments of the present disclosure, referring to FIG. 1, the secondary battery is charged by the following method.

At S110, state information of the secondary battery is obtained. The state information includes a rated capacity and a state capacity, and the state capacity refers to a capacity of the secondary battery when the secondary battery is charged to reach a predetermined cut-off charging voltage.

In this step, the battery management system estimates the state capacity when the secondary battery is charged to the predetermined cut-off charging voltage through the predetermined cut-off charging voltage and by collecting information such as the voltage, temperature, current and the like of the secondary battery. The estimation method is as described above, and details thereof will not be described herein again.

At S120, the rated capacity is compared with the state capacity.

In this step, the battery management system compares the estimated current state capacity of the secondary battery with the rated capacity of the secondary battery, and obtains a comparison result.

At S130b, if the state capacity is less than the rated capacity, the secondary battery to be charged is charged until a voltage of the secondary battery reaches the predetermined cut-off charging voltage, and charging of the secondary battery is stopped.

As the secondary battery repeats charging and discharging cycling, the capacity thereof inevitably gradually degrades. When the battery capacity falls below the rated capacity, the charging mode of the battery is adjusted to enable the secondary battery to stably operate in the later period, and prolong the cycle life. Specifically, in this step, the battery management system obtains that the state capacity of the secondary battery is less than the rated capacity of the secondary battery by comparing the rated capacity with the state capacity, indicating that the capacity of the secondary battery has degraded to be lower than the rated capacity of the secondary battery. At this time, if the secondary battery continues to be charged by using the capacity-limited charging method, the overcharge phenomenon occurs, and charging up to the rated capacitor causes rising of the voltage of the secondary battery beyond the predetermined cut-off charging voltage, causing the damage to the secondary battery and excessive consumption of the active lithium on the cathode sheet, and affecting the cycle service life of the secondary battery. Hence, the secondary battery is charged by using the voltage cut-off charging mode. The so-called voltage cut-off charging refers to charging the secondary battery to be charged, and collecting the voltage of the secondary battery in real time or periodically through the battery management system during the charging until the voltage of the secondary battery reaches the predetermined cut-off charging voltage, and stopping charging of the secondary battery.

Therefore, in the method of charging the secondary battery provided by the embodiment of the present disclosure, the state information of the secondary battery is obtained in real time or periodically through the battery management system, and the state capacity and the rated capacity of the secondary battery are compared, so as to distinguish the cycle service life of the secondary battery, i.e., when the state capacity is higher than the rated capacity or the state capacity degrades to be equal to the rated capacity, it is determined that the secondary battery is at an early stage of the cyclic usage cycle, and a capacity-limited charging mode is adopted for the secondary battery; and when the state capacity degrades to be lower than the rated capacity, it is determined that the secondary battery is at a later period of the cyclic usage period, and a voltage cut-off charging mode is adopted for the secondary battery, so that the cycle and the storage life of the secondary battery are effectively prolonged, the energy efficiency of the secondary battery is improved, the energy loss during charging and discharging is reduced, and the use cost of the secondary battery is reduced.

Taking the lithium iron phosphate battery as an example, if a rated capacity C of the lithium iron phosphate battery Cₙ is 100 Ah, a predetermined cut-off charging voltage is 3.65V, and a state capacity of the lithium iron phosphate battery estimated by the battery management system is 90 Ah and less than the rated capacity, the lithium iron phosphate battery is charged until the voltage reaches the predetermined cut-off charging voltage, i.e., 3.65V, and then the charging is stopped.

In this embodiment of the present disclosure, charging the secondary battery to be charged may include any one of constant current charging, constant power charging, stepped current charging or stepped power charging, and is specifically selected according to different charging devices and actual charging requirements.

In some embodiments of the present disclosure, the secondary battery is charged in a constant current charging mode, a charging current is Iₙ, Iₙ = n₁ × Cₙ, 0 < n₁ ≤ 10, where Cₙ is the rated capacity of the secondary battery in ampere-hours (Ah), and Iₙ is expressed in amperes (A). For example, if n₁ = 5, and Cₙ is 100, the secondary battery to be charged is charged by using the charging current of 500A, and a cut-off point of constant current charging is determined according to the comparison result between the state capacity and the rated capacity from the battery management system. That is, regardless of whether the charging mode of capacity-limited charging provided in step S130a or the charging mode of the voltage cut-off charging provided in step S130b is selected, the constant current charging mode may be used to charge the secondary battery.

In some embodiments of the present disclosure, the secondary battery is charged in a constant power charging mode, a charging power is Pₙ, Pₙ = n₂ × 3.2 × Cₙ, 0 < n₂ ≤ 5, and Pₙ is expressed in watts (W). For example, if n₂ = 3, and Cₙ is 100, the secondary battery to be charged is charged by using a charging power of 3 × 3.2 × 100W, and a cut-off point of constant power charging is determined according to a comparison result between the state capacity and the rated capacity from the battery management system. That is, regardless of whether the charging mode of the capacity-limited charging provided in step S130a or the charging mode of the voltage cut-off charging provided in step S130b is selected, the constant power flow charging mode may be used to charge the secondary battery.

In some embodiments of the present disclosure, the secondary battery is charged in a stepped current charging mode. Specifically, charging the secondary battery in a stepped current charging mode includes:
dividing a charging process of the secondary battery to be charged into N charging stages with stepwise variation through the battery management system, where N ≥ 2;
setting a charging current of each charging stage through the battery management system;
setting a cut-off charging capacity of each charging stage through the battery management system;
performing constant current charging on the secondary battery to be charged based on the charging current of a respective charging stage of the N charging stages, and switching to a next charging stage when the capacity of the secondary battery to be charged reaches the cut-off charging capacity that is set in the respective charging stage.

In some embodiments of the present disclosure, the secondary battery is charged in a stepped current charging mode. Specifically, charging the secondary battery in a stepped current charging mode includes:
dividing a charging process of the secondary battery to be charged into N charging stages with stepwise variation through the battery management system, where N ≥ 2;
setting a charging current of each charging stage through the battery management system;
setting a cut-off charging voltage of each charging stage through the battery management system;
performing constant current charging on the secondary battery to be charged based on the charging current of a respective charging stage of the N charging stages, and switching to a next charging stage when a voltage of the secondary battery to be charged reaches the cut-off charging voltage that is set in the respective charging stage.

According to the comparison result between the state capacity and the rated capacity from the battery management system, the cut-off point for constant current charging is determined. That is, regardless of whether the charging mode of capacity-limited charging provided in step S130a or the charging mode of voltage cut-off charging provided in step S130b, the secondary battery may be charged in a stepped current charging mode.

In some embodiments of the present disclosure, a maximum value of the stepped charging current is Iₘₐₓ, a minimum value of the stepped charging current is Iₘᵢₙ, and 1 < Iₘₐₓ/Iₘᵢₙ < 100 is satisfied. In the charging process, with a depth of lithium intercalation in the anode increases, the charging current is gradually reduced, the risk of lithium plating of the secondary battery during the charging and the damage to the anode structure are reduced, thereby improving the cycle life, and lithium plating and excessively long charge time can be avoided by a ratio of the maximum charging current to the minimum charging current within the above range. Further, the charging current of the N charging stages is sequentially decreased from a first charging stage to a N^{th} charging stage. The charging current of the first charging stage is Iₘₐₓ , for example, Cₙ is 100, that is, the charging current of the first charging stage is 1000A, and the charging current in the last stage may be set to 10A. Depending on the different charging devices and the different actual charging requirements (e.g., fast charging or slow charging), different maximum and minimum values for the stepped charging current, i.e., Iₘₐₓ and Iₘᵢₙ, may be selected. For example, Iₘₐₓ may be 7Cₙ, 5Cₙ or 3Cₙ, Iₘᵢₙ may be 1Cₙ, 0.5Cₙ or 0.1Cₙ.

Taking two charging stages as an example (N = 2), and taking the rated capacity Cₙ of the secondary battery as 100 Ah and the predetermined cut-off charging voltage as 3.65V as an example, the stepped current charging of the secondary battery is specifically described as follows.

The battery management system obtains a result that the state capacity of the secondary battery is greater than or equal to the rated capacity after comparison, the charging current at a first charging stage is 10Cₙ, that is, the secondary battery is charged with a charging current of 1000A, until the capacity of the secondary battery reaches 0.5Cₙ, and a second charging stage is performed, the charging current at the second charging stage is 5Cₙ, that is, the secondary battery is charged with a charging current of 500A, and when the capacity of the secondary battery reaches the rated capacity, i.e., Cₙ, charging of the secondary battery is stopped.

The battery management system obtains a result that the state capacity of the secondary battery is less than the rated capacity after comparison, the charging current at a first charging stage is 10Cₙ, that is, the secondary battery is charged with a charging current of 1000A until the capacity of the secondary battery reaches 40% of the rated capacity, i.e., when the capacity of the secondary battery reaches 0.4 Cₙ Ah, a second charging stage is performed, the charging current of the second charging stage is 5Cₙ, that is, the secondary battery is charged with a charging current of 500A, the voltage of the secondary battery reaches a predetermined cut-off voltage, i.e., 3.65V, and charging of the secondary battery is stopped.

In some embodiments of the present disclosure, the secondary battery is charged in a stepped power charging mode. Specifically, charging the secondary battery in a stepped power charging mode includes:
dividing a charging process of the secondary battery to be charged into N charging stages with stepwise variation through the battery management system, where N ≥ 2;
setting a charging power of each charging stage through the battery management system;
setting a cut-off charging capacity of each charging stage through the battery management system;
performing constant power charging on the secondary battery to be charged based on the charging power of a respective charging stage of the N charging stages, and switching to a next charging stage when a capacity of the secondary battery to be charged reaches the cut-off charging capacity that is set in the respective charging stage.

In some embodiments of the present disclosure, the secondary battery is charged in a stepped power charging mode. Specifically, charging the secondary battery in a stepped power charging mode includes:
dividing a charging process of the secondary battery to be charged into N charging stages with stepwise variation through the battery management system, where N ≥ 2;
setting a charging power of each charging stage through the battery management system;
setting a cut-off charging voltage of each charging stage through the battery management system;
performing constant power charging on the secondary battery to be charged based on the charging power of a respective charging stage of the N charging stages, and switching to a next charging stage when a voltage of the respective secondary battery to be charged reaches the cut-off charging voltage that is set in the respective charging stage.

According to the comparison result between the state capacity and the rated capacity from the battery management system, the cut-off point for constant current charging is determined. That is, regardless of whether the charging mode of capacity-limited charging provided in step S130a or the charging mode of voltage cut-off charging provided in step S130b, the secondary battery may be charged in a stepped power charging mode.

In some embodiments of the present disclosure, a maximum value of the stepped charging power is Pₘₐₓ, a minimum value of the stepped charging power is Pₘᵢₙ , and 1 < Pₘₐₓ /Pₘᵢₙ < 75 is satisfied. In the charging process, as the depth of lithium intercalation in the anode increases, the charging power is gradually reduced, the risk of lithium plating of the secondary battery during the charging and the damage to the anode structure is reduced, thereby improving the cycle life, and lithium plating can be avoided and the damage to the anode structure can be reduced by a ratio of the maximum charging power to the minimum charging power within the above range. Further, the charging power of the N charging stages is sequentially decreased from a first charging stage to a N^{th} charging stage. The charging power of the first charging stage is the maximum, i.e., Pₘₐₓ, and in combination with the foregoing Pₙ = n₂ × 3.2 × Cₙ , where 0 < n₂ ≤ 5, and taking the rated capacity Cₙ of the secondary battery as 100 Ah as an example, it can be concluded that the charging power of the first charging stage is calculated to be 1600W maximum. Depending on the different charging devices and the different actual charging requirements (e.g., fast charging or slow charging), different maximum values for the stepped charging power, i.e., Pₘₐₓ, may be selected. For example, Pₘₐₓ may be 4 × 3.2 × Cₙ, 3 × 3.2 × Cₙ, or 2 × 3.2 × C_{y}. The minimum charging power may be set reasonably according to the above ratio.

Taking two charging stages as an example (N = 2), and taking the rated capacity Cₙ of the secondary battery as 100 Ah and the predetermined cut-off charging voltage as 3.65V as an example, the stepped power charging of the secondary battery is specifically described as follows.

The battery management system obtains a result that the state capacity of the secondary battery is greater than or equal to the rated capacity after comparison, the charging power at a first charging stage is 5 × 3.2 × Cₙ, that is, the secondary battery is charged with a charging power of 5 × 3.2 × 100W, until the capacity of the secondary battery reaches 0.5Cₙ Ah, and a second charging stage is performed, the charging power at the second charging stage is 2.5 × 3.2 × Cₙ , that is, the secondary battery is charged with a charging power of 2.5 × 3.2 × 100W, and when the capacity of the secondary battery reaches the rated capacity Cₙ, charging of the secondary battery is stopped.

The battery management system obtains a result that the state capacity of the secondary battery is less than the rated capacity after comparison, the charging power at a first charging stage is 5 × 3.2 × Cₙ, that is, the secondary battery is charged at a charging power of 5 × 3.2 × 100W, until the capacity of the secondary battery reaches 40% of the rated capacity, i.e., when the voltage of the secondary battery reaches 0.4 Cₙ, a second charging stage is performed, the charging power of the second charging stage is 2.5 × 3.2 × Cₙ, that is, the secondary battery is charged with a charging power of 2.5 × 3.2 × 100W until the voltage of the secondary battery reaches the predetermined cutoff voltage 3.65V, and charging of the secondary battery is stopped.

In addition, in the method of charging the secondary battery provided in the embodiment of the present disclosure, for the N/P value of the secondary battery to be charged is 0.7-1.05, N is a capacity of the anode sheet per unit area in the secondary battery to be charged, and P is a capacity of the cathode sheet per unit area in the secondary battery to be charged. When the N/P value is within the above range, sufficient active lithium may be contained in the cathode sheet of the secondary battery to be charged, and in combination with the capacity-limited charging method suitable for the early stage of the service life of the secondary battery provided by the embodiment of the present disclosure and the voltage cut-off charging method suitable for the later stage of the service life of the secondary battery, a sufficient amount of active lithium may be provided in the full life cycle of the secondary battery for the secondary battery to perform cyclic (de)intercalation, thereby reducing the capacity degradation efficiency of the secondary battery and prolonging the cycle service life of the battery.

Preferably, the N/P value is 0.7-0.99, i.e., designed as N/P < 1, so that the active lithium in the cathode sheet of the secondary battery is excessive, and the active lithium is rich. By fully making use of the characteristic that the lithium (de)intercalation capacity of the anode active material remains basically undegraded throughout the full life cycle of the secondary battery, a charging strategy of capacity-limited charging is adopted in the early stage of the life cycle of the secondary battery, and with the actual ratio of the secondary battery, i.e., N/P > 1, during operation, the anode sheet is enabled to reach the maximum lithium intercalation amount without inducing lithium plating. Because N/P < 1 is designed, the use capacity of the cathode sheet is increased, and during the operation of the secondary battery, only part of the active lithium ion is released by the cathode sheet by capacity-limited charging or voltage cut-off charging, and the excess active lithium ion is used as a reserve to supplement the active lithium loss during operation of the secondary battery. Experiments prove that the lower the N/P value is in the range from 0.7 to 1.05, the higher the number of zero degradation cycles of the secondary battery under the condition of 25°C and 1C/1C is, up to 7000 cycles, the higher the capacity retention rate after 6000 times of cycle under the condition of 25°C and 1C/1C, i.e., 99.7% can still be reached.

As N/P > 1.05 is designed, when the state capacity of the secondary battery is greater than or equal to the rated capacity of the secondary battery, the charging strategy of capacity-limited charging is adopted, that is, charging is performed until the rated capacity, and charging is stopped, so that the amount of lithium intercalation on the anode sheet is kept unchanged, the degradation amplitude of the battery is reduced, and the time at which the state capacity of the secondary battery degrades below the rated capacity is delayed.

The method for testing the N/P value of the secondary battery includes:
testing a capacity N of the anode sheet per unit area: assembling the anode sheet per unit area, in which active material at a side thereof is scraped off, with a lithium sheet, a separator film and an electrolyte into a coin type battery, and after discharging at a discharge rate of 0.1C to 0.005V, discharging at 0.05 mA to 0.005V, discharging at 0.02 mA to 0.005V, and charging at a charging rate of 0.1C to 2V, the obtained charging capacity being the capacity N of the anode sheet per unit area;
a capacity P of the cathode sheet per unit area: assembling the cathode sheet per unit area, in which active material at a side thereof is scraped off, with a lithium sheet, a separator film and an electrolyte into a coin type battery, and after charging at a charging rate of the 0.1C to 3.7V, keeping the constant voltage to 50 µA, and discharging at a discharge rate of 0.1C to 2.0V, the obtained discharging gram capacity being the capacity P of the cathode sheet per unit area.

Based on the method described in the foregoing embodiments, an embodiment of the present disclosure further provides a system for charging a secondary battery. Referring to FIG. 2, the system for charging the secondary battery includes a secondary battery 210, a battery management system 220, and a charging device 230. A sampling module 221 is arranged in the battery management system 220. The sampling module 221 is in communication connection with the secondary battery 210. A charging end of the secondary battery 210 is electrically connected with an output end of the charging device 230, and an input end of the charging device 230 is in communication connection with the battery management system 220. The battery management system 220 collects a charging current, a real-time charging voltage, a temperature, an internal resistance and the like of the secondary battery 210 through the sampling module 221, and the information may be specifically collected by the sampling module 221 of the battery management system 220 and may be stored in a controller of the battery management system 220 to obtain the state capacity of the secondary battery 210. The battery management system 220 compares the state capacity with the rated capacity of the secondary battery, determines whether to adopt a charging strategy of capacity-limited charging or a charging strategy of voltage cut-off charging, transmits the determined charging strategy to the charging device 230, and charges the secondary battery 210 through the charging device 230.

A person of ordinary skill in the art may understand that all or part of the processes in the foregoing embodiment methods are implemented by using a computer program for instructing related hardware. The computer program may be stored in a non-volatile computer-readable storage medium, and the computer program, when executed, may include a process of the foregoing method embodiments. Any reference to a memory, a storage, a database, or another medium used in various embodiments provided in the embodiments of the present disclosure may include at least one of a non-volatile memory and a volatile memory. The non-volatile memory may include a read-only memory (ROM), a magnetic tape, a floppy disk, a flash memory, an optical memory, or the like. The volatile memory may include a random access memory (RAM) or an external cache memory. By way of illustration and not limitation, the RAM may be in various forms, such as static random access memory (SRAM) or dynamic random access memory (DRAM).

It should be noted that the secondary battery suitable for the method of charging the secondary battery provided in the embodiments provided in the present disclosure may be a lithium-ion battery, a lithium metal battery, a lead-acid battery, a nickel-cadmium battery, a nickel-hydrogen battery, a lithium-sulfur battery, a lithium-air battery, a sodium-ion battery, or the like, which is not limited herein. In terms of scale, the secondary battery in the embodiment of the present disclosure may be a battery cell, or may be a battery module or a battery pack, which is not limited herein. From the application scenario, the secondary battery may be applied to a power device such as an automobile or a ship. For example, it may be applied to a power automobile to supply power to a motor of the power automobile as a power source of the power automobile. The battery may also supply power to other electric devices in the power automobile, such as an in-vehicle air conditioner, a vehicle-mounted player, or the like.

The method of charging the secondary battery provided by the embodiments of the present disclosure is described in detail above, and the principles and embodiments of the present disclosure are described in detail with reference to specific examples, and the description of the above embodiments is only used to help understand the technical solutions and the core concepts of the present disclosure; those skilled in the art should understand that the technical solutions described in the foregoing embodiments may still be modified, or some technical features thereof may be equivalently replaced; and these modifications or replacements do not make the essence of the corresponding technical solutions fall within the scope of the technical solutions of the embodiments of the present disclosure.

## Claims

1. A method of charging a secondary battery, comprising:
obtaining state information of a secondary battery to be charged, the state information including a rated capacity and a state capacity, wherein the state capacity is a capacity of when the secondary battery to be charged is charged to a predetermined cut-off charging voltage;
comparing the rated capacity with the state capacity;
charging, in response to the state capacity being greater than or equal to the rated capacity, the secondary battery to be charged until a capacity of the secondary battery to be charged reaches the rated capacity, and stopping charging of the secondary battery to be charged.

2. The method of charging a secondary battery according to claim 1, wherein after comparing the rated capacity with the state capacity, the method further comprises:
charging, in response to the state capacity being less than the rated capacity, the secondary battery to be charged until a voltage of the secondary battery to be charged reaches the predetermined cut-off charging voltage, and stopping charging of the secondary battery to be charged.

3. The method of charging a secondary battery according to any one of claims 1-2, wherein charging the secondary battery to be charged comprises:
charging the secondary battery to be charged with a constant charging current, wherein the charging current is Iₙ, Iₙ = n₁ × Cₙ, 0 < n₁ ≤ 10, where Cₙ is the rated capacity in ampere-hours (Ah), and Iₙ is expressed in amperes (A).

4. The method of charging a secondary battery according to any one of claims 1-2, wherein charging the secondary battery to be charged comprises:
charging the secondary battery to be charged with a constant charging power, wherein the charging power is Pₙ, Pₙ = n₂ × 3.2 × Cₙ, 0 < n₂ ≤ 5, where Cₙ is the rated capacity in ampere-hours (Ah), and Pₙ is expressed in watts (W).

5. The method of charging a secondary battery according to any one of claims 1-2, wherein charging the secondary battery to be charged comprises:
charging the secondary battery to be charged with a stepped charging current, wherein a maximum value of the stepped charging current is Iₘₐₓ, a minimum value of the stepped charging current is Iₘᵢₙ, and 1 < Iₘₐₓ/Iₘᵢₙ < 100 is satisfied.

6. The method of charging a secondary battery according to claim 5, wherein charging the secondary battery to be charged with the stepped charging current comprises:
dividing a charging process of the secondary battery to be charged into N charging stages with stepwise variation, where N ≥ 2;
setting a charging current of each of the N charging stages;
setting a cut-off charging capacity of each of the N charging stages;
performing constant current charging on the secondary battery to be charged based on the charging current of a respective charging stage of the N charging stages, and switching to a next charging stage when the capacity of the secondary battery to be charged reaches the cut-off charging capacity that is set in the respective charging stage.

7. The method of charging a secondary battery according to claim 5, wherein charging the secondary battery to be charged with the stepped charging current comprises:
dividing a charging process of the secondary battery to be charged into N charging stages with stepwise variation, where N ≥ 2;
setting a charging current of each of the N charging stages;
setting a cut-off charging voltage of each of the N charging stages;
performing constant current charging on the secondary battery to be charged based on the charging current of a respective charging stage of the N charging stages, and switching to a next charging stage when a voltage of the secondary battery to be charged reaches the cut-off charging voltage that is set in the respective charging stage.

8. The method of charging a secondary battery according to any one of claims 6-7, wherein the charging current of the N charging stages is sequentially decreased from a first charging stage to a N^{th} charging stage.

9. The method of charging a secondary battery according to any one of claims 1-2, wherein charging the secondary battery to be charged comprises:
charging the secondary battery to be charged with a stepped charging power, wherein a maximum value of the stepped charging power is Pₘₐₓ, a minimum value of the stepped charging power is Pₘᵢₙ, and 1 < Pₘₐₓ/Pₘᵢₙ < 75 is satisfied.

10. The method of charging a secondary battery according to claim 9, wherein charging the secondary battery to be charged with the stepped charging power comprises:
dividing a charging process of the secondary battery to be charged into N charging stages with stepwise variation, where N ≥ 2;
setting a charging power of each of the N charging stages;
setting a cut-off charging capacity of each of the N charging stages;
performing constant power charging on the secondary battery to be charged based on the charging power of a respective charging stage of the N charging stages, and switching to a next charging stage when a capacity of the secondary battery to be charged reaches the cut-off charging capacity that is set in the respective charging stage.

11. The method of charging a secondary battery according to claim 9, wherein charging the secondary battery to be charged with the stepped charging power comprises:
dividing a charging process of the secondary battery to be charged into N charging stages with stepwise variation, where N ≥ 2;
setting a charging power of each of the N charging stages;
setting a cut-off charging voltage of each of the N charging stages;
performing constant power charging on the secondary battery to be charged based on the charging power of a respective charging stage of the N charging stages, and switching to a next charging stage when a voltage of the secondary battery to be charged reaches the cut-off charging voltage that is set in the respective charging stage.

12. The method of charging a secondary battery according to any one of claims 10-11, wherein the charging power of the N charging stages is sequentially decreased from a first charging stage to a N^{th} charging stage.
